# EUROPÄISCHE PATENTSCHRIFT

(11) **EP 1 781 468 B1**
(45) Veröffentlichungstag und Bekanntmachung des Hinweises auf die Patenterteilung: **10.09.2014**
(21) Anmeldenummer: 05775841.9
(22) Anmeldetag: 21.07.2005
(51) Int. Cl.: B32B 27/32, B65D 65/40

(54) **METALLISIERTE FOLIE MIT GUTEN BARRIEREEIGENSCHAFTEN**
METALLISED FILM HAVING GOOD BARRIER PROPERTIES
FILMS METALLISES PRESENTANT DE BONNES PROPRIETES BARRIERES

(30) Priorität: 25.08.2004 DE 102004041359
(43) Veröffentlichungstag der Anmeldung: 09.05.2007
(73) Patentinhaber: Treofan Germany GmbH & Co.KG, 66539 Neunkirchen (DE)
(72) Erfinder: JUNG, Joachim, 66540 Neunkirchen (DE); SCHLACHTER, Peter, 66132 Bischmisheim (DE)
(74) Vertreter: Kremer, Viola
(86) Internationale Anmeldenummer: PCT/EP2005/053538
(87) Internationale Veröffentlichungsnummer: WO 2006/021472

(56) Entgegenhaltungen:
- WO-A-2004/073978
- US-A- 4 604 322
- US-A- 5 443 915

## Beschreibung

Die vorliegende Erfindung betrifft eine metallisierte transparente Polypropylenfolie und deren Verwendung in Laminaten, sowie ein Verfahren zur Herstellung von Beutelverpackungen aus diesen Laminaten

Biaxial orientierte Polypropylenfolien (boPP) werden heute als Verpackungsfolien in den verschiedensten Anwendungen eingesetzt. Polypropylenfolien zeichnen sich durch viele vorteilhafte Gebrauchseigenschaften wie eine hohe Transparenz, Glanz, Barriere gegen Wasserdampf, gute Bedruckbarkeit, Steifigkeit, Durchstoßfestigkeit etc. aus. Trotz dieser Vielfalt günstiger Eigenschaften gibt es noch heute Bereiche in denen die Polypropylenfolie mit anderen Materialien kombiniert werden muß, um bestimmte Defizite auszugleichen. Insbesondere für feuchtigkeits- und sauerstoffempfindliche Füllgüter konnten sich Polypropylenfolien als alleiniges Verpackungsmaterial bisher nicht durchsetzen. Beispielsweise spielt im Bereich der Snack Verpackung sowohl die Wasserdampfbarriere als auch die Sauerstoffbarriere eine entscheidende Rolle. Bei einer Wasseraufnahme von nur etwa 3% werden Kartoffelchips und andere Snackartikel so pappig, daß der Verbraucher sie als ungenießbar empfindet. Zusätzlich muß die Sauerstoffbarriere sicherstellen, daß die in den Snackartikeln enthaltenen Fette nicht durch Photooxidation einen ranzigen Geschmack entwickeln. Diesen Anforderungen genügt die Polypropylenfolie alleine als Verpackungsmaterial nicht..

Es ist bekannt die Barriereeigenschaften von boPP durch eine Metallisierung zu verbessern, wodurch sowohl die Wasserdampf- als auch die Sauerstoffdurchlässigkeit erheblich erniedrigt wird. Beispielsweise kann die Sauerstoffdurchlässigkeit einer transparenten 20µm boPP Folie durch Metallisierung und Laminierung mit einer weiteren 20µm transparenten Folie auf ca. 40 cm³/m² * Tag * bar reduziert werden. (siehe VR Interpack 99 Special D28 "Der gewisse Knack"). Bei Anwendungen für besonders empfindliche Produkte ist sogar diese Barriere der metallisierten boPP-Folien nicht ausreichend. In solchen Fällen wird die Laminierung eines Substrats mit einer Aluminiumfolie bevorzugt. Diese Verpackung ist sehr viel aufwendiger und teurer als Verbunde aus metallisierter boPP-Folie, aber sie bietet auf Grund der Laminierung mit der hochdichten Aluminiumfolie eine hervorragende Sauerstoffbarriere. Beispielsweise werden derartige Laminate mit Aluminiumfolie für sogenannte Tütensuppen und Fertigsaucen (z.B. Maggi-Fix Produkte) und ähnliche pulverförmige Füllgüter eingesetzt, die auf Grund des hohen Fettgehaltes und der großen Oberfläche der Pulver vor Licht und Sauerstoff besonders effektiv geschützt werden müssen.

In einigen Anwendungen werden boPP-Folien auch nur im Hinblick auf den optischen Eindruck metallisiert. Hier soll beim Verbraucher der Eindruck einer hochwertigen Verpackung entstehen, ohne daß tatsächlich eine bessere Barriere vorliegt. In diesen Fällen sind die Anforderungen an die metallisierte Folie vergleichsweise unkritisch. Die metallisierte Folie muß nur eine gleichmäßige Optik und eine hinreichende Metallhaftung aufweisen.

DE 39 33 695 beschreibt eine derartige nicht siegelbare Folie aus einer Basisschicht aus Polypropylen und mindestens einer Deckschicht, die aus einem speziellen Ethylen-Propylen-Copolymeren aufgebaut ist. Dieses Copolymere zeichnet sich durch einen Ethylengehalt von 1,2 bis 2,8 Gew.-% und einen Verteilungsfaktor von >10 und eine Schmelzenthalpie von > 80 J/g und einen Schmelzindex von 3 bis 12 g/10min (21,6N und 230°C) aus. Es ist beschrieben, daß die Eigenschaften des Copolymeren zur Verbesserung der Bedruckbarkeit und der optischen Eigenschaften in diesen engen Grenzen gehalten werden müssen.

US 5,443,915 beschreibt metallisierte Folien mit einem weiß-opaken Erscheinungsbild. Die Folien sind aus einer Basisschicht aufgebaut und haben auf einer Seite eine weiß-opake Schicht, welche mit einem Kaltsiegelkleber versehen wird. Auf der gegenüberliegenden Seite wird entweder direkt auf der Oberfläche der Basisschicht metallisiert oder diese Oberfläche der Basisschicht weißt zusätzliche eine zu metallisierende Deckschicht auf. Diese zu metallisierende Deckschicht ist aus einem alpha Olefin-Homopolymer oder Copolymer mit 2 oder 3 C-Atomen aufgebaut, beispielsweise aus isotaktischem Propylenhomopolymer, statischen oder Blockcopolymeren mit 0,5 bis 10 Gew.-% Ethylen. Die metallisierte Deckschicht ist vorzugsweise 5gauge dick und aus einem Ethylen-Proylen-Copolymeren mit 3 Gew.-% Ethylen aufgebaut. Die Sauerstoffbarriere gemäß Beispiel beträgt 5ccm/100inch² * 24h bei 75°F und 60% relativer Luftfeuchte.

US 4,604,322 beschreibt metallsierte Folien, welche eine Basisschicht mit Fettsäureamid umfassen und eine Deckschicht aus Propylen-Ethylen-Copolymeren aufweisen, die 1 bis 10 Gew.-% Ethylen enthalten. Die Deckschichten enthalten kein Gleitmittel. Die Folie zeichnet sich durch einen niedrigen Reibungskoeffizienten und eine gute Metallhaftung aus.

Der vorliegenden Erfindung lag die Aufgabe zu Grunde eine Folie mit einer hervorragenden Wasserdampf- und Sauerstoffbarriere zur Verfügung zu stellen.

Die der Erfindung zugrundeliegende Aufgabe wird gelöst durch metallisierte, biaxial orientierte transparente Polypropylenmehrschichtfolie mit
(a) mindestens zwei Schichten aus einer Basisschicht und mindestens einer ersten Deckschicht auf einer Oberfläche der Basisschicht oder
(b) mindestens drei Schichten aus einer Basisschicht und mindestens einer ersten Zwischenschicht und einer ersten Deckschicht, wobei die erste Deckschicht und die erste Zwischenschicht aufeinanderliegen, dadurch gekennzeichnet, daß
(a) die erste Deckschicht mindestens 80 Gew.-% eines Propylen-Ethylen-Copolymeren enthält, welches einen Ethylengehalt von 1,2 bis < 2,8 Gew.-% und einen Propylengehalt von 97,2 - 98,8 Gew.- % und einen Schmelzpunkt im Bereich von 140 bis 160°C und eine Schmelzenthalpie von 80 bis 110 J/g aufweist oder
(b) die erste Deckschicht und die erste Zwischenschicht jeweils mindestens 80 Gew.-% eines Propylen-Ethylen-Copolymeren enthalten, welches einen Ethylengehalt von 1,2 bis < 2,8 Gew.-% und einen Propylengehalt von 97,2 - 98,8 Gew.- % und einen Schmelzpunkt im Bereich von 140 bis 160°C und eine Schmelzenthalpie von 80 bis 110 J/g aufweist und
(a) die erste Deckschicht eine Dicke von **mindestens 3,5 µm** aufweist oder
(b) die erste Deckschicht eine Dicke von 0,5 - 2µm und die erste Zwischenschicht eine Dicke von **mindestens 3 µm** und
   die Folie auf der Oberfläche der ersten Deckschicht metallisiert ist.

Die Aufgabe wird des weiteren durch Laminate gelöst, welche aus diesen Folien hergestellt werden.

Im Sinne der vorliegenden Erfindung ist die Basisschicht diejenige Schicht der Folie welche mehr als 50%, vorzugsweise mehr als 65% der Gesamtdicke der Folie ausmacht. Zwischenschichten sind Schichten die zwischen der Basisschicht und einer weiteren Polyolefin-Schicht liegen. Deckschichten bilden die Außenschichten der unmetallisierten coextrudierten Folie. Deckschichten können unmittelbar auf der Basisschicht aufgebracht sein. Des weiteren gibt es Ausführungsformen bei denen die Deckschichten auf der oder den Zwischenschichten der Folie aufgebracht sind.

Die vorliegende Erfindung geht von den bekannten metallisierten transparenten coextrudierten Folien aus, welche eine gute Metallhaftung aufweisen. Es wurde gefunden, daß diese bekannten metallisierten Folien trotz guter Metallhaftung eine Barriere gegenüber Wasserdampf und Sauerstoff aufweisen, die für viele Anwendungen nicht ausreichend ist. Es wurde gefunden, daß die Barrierewirkung der Metallisierung überraschenderweise erheblich verbessert werden kann, wenn die Schichtdicke der zu metallisierenden Deckschicht auf mindestens 3,5µm angehoben wird und diese Schicht aus den im Anspruch 1 näher definierten Propylen-Ethylen-Copolymeren mit niedrigem Ethylengehalt aufgebaut ist.

Diese zu metallisierende dicke Schicht läßt sich durch eine einzige Deckschicht entsprechender Dicke auf der transparenten Basisschicht realisieren. Vorteilhaft kann auch eine Zwischenschicht mit einer Deckschicht kombiniert werden, wobei hier die Gesamtdicke aus Zwischen- und Deckschicht gleichfalls eine Mindestdicke von 3,5µm aufweisen soll und selbstverständlich beide Schichten aus dem besagten Copolymeren sein müssen. Diese Ausführungsform ist hinsichtlich der Additivierung besonders flexibel, da die optionalen Additive für die Deckschicht und für die Zwischenschicht unabhängig ausgewählt werden können.

Überraschenderweise verbessert diese Maßnahme die Barriere der transparenten Folie nach Metallisierung erheblich, obwohl an den unmetallisierten Folien keine besonderen Barriere-Eigenschaften nachgewiesen werden können. Es war vor dem Prioritätszeitpunkt nicht bekannt, daß die Dicke der zu metallisierenden Schicht einen Einfluß auf die Barrierewirkung der Metallschicht haben könnte. Überraschenderweise ist dies bei Propylen-Copolymeren mit niedrigem Ethylengehalt der Fall, obwohl ein derartiger Einfluß der Schichtdicke weder bei den strukturell engverwandten Propylenhomopolymeren oder üblichen Propylen-Copolymeren festgestellt werden konnte.

Die erfindungsgemäß in der zu metallisierenden Schicht eingesetzten Propylen-Copolymeren mit niedrigem Ethylengehalt und hohem Schmelzpunkt sind an sich bekannt und werden nachstehend im Rahmen der vorliegenden Erfindung auf Grunde ihres vergleichsweise geringen Ethylengehaltes auch "Minicopo" genannt. So beschreiben verschiedene Lehren den vorteilhaften Einsatz dieser Rohstoffe. Z.B. ist in EP 0 361 280 angegeben, daß dieses Material vorteilhaft als Deckschicht bei metallisierbaren Folien ist. DE3933695 beschreibt verbesserte Hafteigenschaften dieser Deckschichten. Es war jedoch weder bekannt noch vorhersehbar, daß die Dicke dieser speziellen Copolymer-Deckschicht eine kritische Auswirkung auf die Barriereeigenschaften nach Metallisierung haben würde. Es war daher überraschend, daß ab einer Schichtdicke von mindestens 3,5 µm die Barriere signifikant verbessert wird.

Für die Zwecke der vorliegenden Erfindung sind Propylen-Ethylen-Copolymere mit einem Ethylengehalt von 1,2 bis 2,8 Gew.-%, insbesondere 1,5 bis 2,3 Gew.-% besonders bevorzugt. Der Schmelzpunkt liegt vorzugsweise in einem Bereich von 145 bis 155°C und die Schmelzenthalpie vorzugsweise in einem Bereich von 90 bis 100J/g. Der Schmelzflußindex beträgt im allgemeinen 3 bis 15g/10min, vorzugsweise 3 bis 9g/10min (230°C. 21,6N DIN 53 735).

Die zu metallisierende Deckschicht, bzw. die metallisierte Deckschicht wird im Rahmen der vorliegenden Anmeldung als erste Deckschicht bezeichnet. Im allgemeinen enthält die erste Deckschicht mindestens 80 Gew.-%, vorzugsweise 95 bis 100 Gew.-%, insbesondere 98 bis <100 Gew.-% des beschriebenen Copolymeren. Neben diesem Hauptbestandteil kann die Deckschicht übliche Additive wie Stabilisatoren und/oder Neutralisationsmittel in jeweils wirksamen Mengen enthalten. Gegebenenfalls können geringe Mengen eines zweiten verschiedenen Polyolefins, vorzugsweise Propylenpolymeren, enthalten sein, wenn dessen Anteil unter 20 Gew.-%, vorzugsweise unter 5 Gew.-%, liegt und die Metallisierbarkeit der Schicht nicht beeinträchtigt. Derartige Ausführungsformen sind nicht bevorzugt, aber denkbar falls beispielsweise Additive über Konzentrate eingearbeitet werden, die auf einem anderen Polymeren, wie z.B. Propylenhomopolymer oder andere Propylenmischpolymerisaten, beruhen. Im Hinblick auf die Metallisierung sollten Additive, die die Metallisierbarkeit beeinträchtigen, in der Deckschicht nicht enthalten sein. Dies gilt beispielsweise für migrierende Gleitmittel oder Antistatika. Antiblockmittel können gegebenenfalls zur Vermeidung von Verblockung in geringen Menge zugesetzt werden.

In einer zweiten erfindungsgemäßen Ausführungsform weißt die metallisierbare Folie eine Kombination aus einer ersten Deckschicht D und einer ersten Zwischenschicht Z auf, wobei die erste Zwischenschicht Z zwischen der besagten ersten Deckschicht und der Basisschicht B angebracht ist, d.h. eine Oberfläche dieser Zwischenschicht ist mit der Basisschicht verbunden und die zweite gegenüberliegende Oberfläche ist mit der Deckschicht verbunden, gemäß einem Aufbau BZD

Für diese Ausführungsformen sind beide Schichten, erste Deckschicht und erste Zwischenschicht aus dem gleichen vorstehend beschriebenen Minicopo aufgebaut. Beide Schichten enthalten jeweils mindesten 80 Gew.-%, vorzugsweise 95 bis 100 Gew.-%, insbesondere 98 bis <100 Gew.-% des Polymeren, wobei die genaue Zusammensetzung der einzelnen Schichten selbstverständlich nicht identisch sein muß. Diese Ausführungsformen mit einer Kombination aus Zwischenschicht und Deckschicht sind vorteilhaft im Hinblick auf mögliche verschiedene Additivierungen der einzelnen Schichten. So ist es beispielsweise möglich ausgewählte Additive nur der Zwischenschicht zuzufügen und die Deckschicht frei von anderweitigen Zusatzstoffen zu halten. Im allgemeinen werden jedoch beide Schichten Stabilisatoren und Neutralisationsmittel enthalten.

Für die erste beschriebene Ausführungsform beträgt die Dicke der ersten Deckschicht im allgemeinen mindestens 3,5µm, vorzugsweise 3,5 bis 10µm, insbesondere 3,5 bis 5 µm. Für Ausführungsformen mit Zwischenschicht gelten diese Angaben entsprechend für die Gesamtdicke von Zwischenschicht und Deckschicht, wobei die Dicke der Zwischenschicht im allgemeinen mindestens 3,0 µm, vorzugsweise 3,5 - 8µm beträgt und die Dicke der Deckschicht im allgemeinen 0,5 bis 2 µm beträgt.

Zur Verbesserung der Metallhaftung wird die Oberfläche der ersten Deckschicht im allgemeinen in an sich bekannter Weise mittels Corona, Flamme oder Plasma einem Verfahren zur Erhöhung der Oberflächenspannung unterworfen. Typischerweise liegt dann die Oberflächenspannung der so behandelten noch nicht metallisierten Deckschicht in einem Bereich von 35 bis 45 mN/m.

Die Basisschicht der Mehrschichtfolie enthält Polyolefin, vorzugsweise ein Propylenpolymer sowie gegebenenfalls weitere übliche Additive in jeweils wirksamen Mengen. Im allgemeinen enthält die Basisschicht mindestens 85 Gew.-%, vorzugsweise 90 bis 100 Gew.-%, insbesondere 95 bis <100Gew.-%, des Polyolefins, jeweils bezogen auf das Gewicht der Schicht.

Als Polyolefine der Basisschicht sind Propylenpolymere bevorzugt. Diese Propylenpolymeren enthalten 90 bis 100 Gew.-%, vorzugsweise 95 bis 100 Gew.-%, insbesondere 98 bis 100 Gew.-%, Propyleneinheiten und besitzen einen Schmelzpunkt von 120°C oder höher, vorzugsweise 150 bis 170°C, und im allgemeinen einen Schmelzflußindex von 1 bis 10 g/10 min, vorzugsweise 2 bis 8 g/10 min, bei 230°C und einer Kraft von 21,6 N (DIN 53735). Isotaktisches Propylenhomopolymer mit einem ataktischen Anteil von 15 Gew.-% und weniger, Copolymere von Ethylen und Propylen mit einem Ethylengehalt von 5 Gew.-% oder weniger, Copolymere von Propylen mit C₄-C₈-Olefinen mit einem Olefingehalt von 5 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Basisschicht dar, wobei isotaktisches Propylenhomopolymer besonders bevorzugt ist. Die angegebenen Gewichtsprozente beziehen sich auf das jeweilige Polymere.

Die Gesamtdicke der Folie liegt im allgemeinen in einem Bereich von 12 bis 100µm, vorzugsweise 15 bis 60 µm, insbesondere 17 bis 40µm.

In einer weiteren bevorzugten Ausführungsform umfaßt die Folie noch weitere Schichten, die auf der gegenüberliegenden Seite der Basisschicht aufgebracht sind. Durch eine zweite Deckschicht resultieren drei- oder vierschichtige Folien. Ausführungsformen. Zusätzlich eine zweite Zwischenschicht und eine darauf aufgebrachte zweite Deckschicht aufweisen führt zu vier- oder fünfschichtige Folien. In diesen Ausführungsformen beträgt die Dicke der zweiten Deckschicht im allgemeinen 0,5 - 3 µm, eine zweite Zwischenschichten liegt im Bereich von 1 bis 8 µm. Kombinationen aus Zwischenschicht und Deckschicht haben vorzugsweise eine Gesamtdicke von 2 bis 8 µm. Als weitere Schichten sind siegelfähige Schichten bevorzugt, wobei hierunter sowohl heißsiegelfähige als auch kaltsiegelfähige Schichten verstanden werden.

Die zusätzliche/n Schicht oder Schichten enthalten im allgemeinen mindestens 80 Gew.%, vorzugsweise 90 bis <100 Gew.-%, olefinische Polymere oder Mischungen daraus. Geeignete Polyolefine sind beispielsweise Polyethylene, Propylen-Copolymere und/oder Propylen-Terpolymere, sowie die bereits im Zusammenhang mit der Basisschicht beschrieben Propylenhomopolymeren.

Geeignete Propylenco- oder Terpolymere der zusätzlichen zweiten Schichten sind im allgemeinen aus mindestens 50 Gew.-% Propylen und Ethylen und/oder Butyleneinheiten als Comonomer aufgebaut. Bevorzugte Mischpolymerisate sind statistische Ethylen-Propylen-Copolymere mit einem Ethylengehalt von 2 bis 10 Gew.-%, bevorzugt 5 bis 8 Gew.-%, oder statistische Propylen-Butylen-1-Copolymere mit einem Butylengehalt von 4 bis 25 Gew.-%, bevorzugt 10 bis 20 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gesamtgewicht des Terpolymeren. Diese Co- und Terpolymeren haben im allgemeinen einen Schmelzflußindex von 3 bis 15 g/10min, vorzugsweise 3 bis 9 g/10min (230°C, 21,6N DIN 53735) und einen Schmelzpunkt von 70 bis 145°C, vorzugsweise 90 bis 140°C (DSC).

Wie bereits erwähnt enthalten alle Schichten der Folie vorzugsweise Neutralisationsmittel und Stabilisatoren in jeweils wirksamen Mengen.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat und/oder synthetisches Dihydrotalcit (SHYT) einer mittleren Teilchengröße von höchstens 0,7 µm, einer absoluten Teilchengröße von kleiner 10 µm und einer spezifischen Oberfläche von mindestens 40 m²/g. Im allgemeinen werden Neutralisationsmittel in einer Menge von 50 bis 1000 ppm, bezogen auf die Schicht eingesetzt.

In einer bevorzugten Ausführungsform werden der zweiten Deckschicht Antiblockmittel zugefügt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche Polymerisate wie Polymethylmethacrylat (PMMA) Polyamide, Polyester, Polycarbonate und dergleichen, bevorzugt werden Polymethylmethacrylat (PMMA), Siliciumdioxid und Calciumcarbonat. Die wirksame Menge an Antiblockmittel liegt im Bereich von 0,1 bis 2 Gew.-%, vorzugsweise 0,1 bis 0,5 Gew.-%, bezogen auf die jeweilige Deckschicht. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Die Erfindung betrifft weiterhin ein Verfahren zur Herstellung der erfindungsgemäßen Mehrschichtfolie nach dem an sich bekannten Coextrusionsverfahren, wobei Flachfolienherstellung, insbesondere das Stenterverfahren bevorzugt ist.

Im Rahmen dieses Verfahrens werden die den einzelnen Schichten der Folie entsprechenden Schmelzen durch eine Flachdüse coextrudiert, die so erhaltene Folie zur Verfestigung auf einer oder mehreren Walze/n abgezogen, die Folie anschließend gestreckt (orientiert), die gestreckte Folie thermofixiert und gegebenenfalls an der zur Behandlung vorgesehenen Oberflächenschicht plasma- corona- oder flammbehandelt.

Im Einzelnen wird hierbei wie beim Extrusionsverfahren üblich das Polymere bzw. die Polymermischung der einzelnen Schichten in einem Extruder komprimiert und verflüssigt, wobei die gegebenenfalls zugesetzte Additive bereits im Polymer bzw. in der Polymermischung enthalten sein können. Alternativ können diese Zusatzstoffe auch über ein Masterbatch eingearbeitet werden.

Die Schmelzen werden dann gemeinsam und gleichzeitig durch eine Flachdüse (Breitschlitzdüse) gepreßt, und die ausgepreßte mehrschichtige Folie wird auf einer oder mehreren Abzugswalzen bei einer Temperatur von 5 bis 100 °C, vorzugsweise 10 bis 50°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 80 bis 150 °C zweckmäßigerweise mit Hilfe zweier entsprechend dem angestrebten Streckverhältnis verschieden schnellaufender Walzen durchführen und das Querstrecken vorzugsweise bei einer Temperatur von 120 bis 170°C mit Hilfe eines entsprechenden Kluppenrahmens. Die Längsstreckverhältnisse liegen im Bereich von 4 bis 8 vorzugsweise 4,5 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flammbehandelt. Die Behandlungsintensität liegt im Allgemeinen im Bereich von 35 bis 50 mN/m, vorzugsweise 37 bis 45 mN/m, insbesondere 39 bis 42mN/m.

Für die alternative Coronabehandlung wird die Folie zwischen zwei als Elektroden dienenden Leiterelementen hindurchgeführt, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 37 bis 45 mN/m bevorzugt sind.

Die coextrudierte mehrschichtige Folie wird nach den an sich bekannten Verfahren auf der äußeren Oberfläche der ersten Deckschicht mit einer Metallschicht, vorzugsweise aus Aluminium versehen. Diese Metallisierung erfolgt in einer Vakuumkammer, in der Aluminium verdampft und auf der Folienoberfläche niedergeschlagen wird. In einer bevorzugten Ausführungsform kann die zu metallisierende Oberfläche unmittelbar vor der Metallisierung einer Plasmabehandlung unterworfen. Die so metallisierte Folie kann direkt zur Herstellung von Verpackungen eingesetzt werden.

In einer bevorzugten Ausführungsform der Verpackung wird die erfindungsgemäße metallisierte Folie mit einer weiteren biaxial orientierten Folie, vorzugsweise Polypropylenfolie, laminiert, wobei die Laminierung gegen die metallisierte Seite der metallisierten Folie erfolgt. Die Laminierung kann beispielsweise durch Extrusionslaminierung oder mittels Kleberkaschierung erfolgen. Die weitere boPP Folie wird vorzugsweise bedruckt, damit die Verpackung ein attraktives Erscheinungsbild aufweist. Grundsätzlich können für die weitere Folie transparente oder auch opake boPP Folien eingesetzt werden.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Wasserdampf- und Sauerstoffdurchlässigkeit

Die Wasserdampfdurchlässigkeit wird gemäß ASTM F 1249 bestimmt. Die Bestimmung der Sauerstoffbarrierewirkung erfolgt gemäß Entwurf DIN 53 380 Teil 3 bei einer Luftfeuchte von 50 %.

### Bestimmung des Ethylengehalts

Der Ethylengehalt der Copolymeren wird mittels ¹³C-NMR Spektroskopie bestimmt. Die Messungen wurden mit einem Kernresonanzspektrometer der Firma Bruker Avance 360 durchgeführt. Das zu charakterisierende Copolymer wird in Tetrachlorethan gelöst, so daß eine 10% Mischung entsteht. Als Bezugsstandard wurde Octamethyltetrasiloxan (OTMS) zugegeben. Das Kernresonanzspekrum wurde bei 120°C gemessen. Die Auswertung der Spektren erfolgte wie in J.C. Randall Polymer Sequence Distribution (Academic Press, New York, 1977) beschrieben.

### Schmelzpunkt und Schmelzenthalpie

Die Bestimmung des Schmelzpunkts und der Schmelzenthalpie erfolgt mittels DSC-(Differential-Scanning-Calometrie) Messung (DIN 51 007 und DIN 53 765). Einige Milligramm (3 bis 5 mg) des zu charakterisierenden Rohstoffs werden in einem Differentialkalorimeter mit einer Heizgeschwindigkeit von 20°C pro Minute aufgeheizt. Es wird die Wärmeflußrate gegen die Temperatur aufgetragen und der Schmelzpunkt als Maximum der Schmelzkurve und die Schmelzenthalpie als Fläche des jeweiligen Schmelzepeaks ermittelt.

### Oberflächenspannung

Die Oberflächenspannung wurde mittels Tintenmethode nach DIN 53 364 bestimmt.

Die Erfindung wird nunmehr durch die nachfolgenden Beispiele erläutert.

### Beispiel 1:

Nach dem Coextrusionsverfahren wurde aus einer Breitschlitzdüse bei einer Extrusionstemperatur von 240 bis 270°C eine dreischichtige Vorfolie extrudiert. Diese Vorfolie wurde zunächst auf einer Kühlwalze abgezogen und abgekühlt. Anschließend wurde die Vorfolie in Längs- und Querrichtung orientiert und abschließend fixiert. Die Oberfläche der ersten Deckschicht wurde mittels Corona zur Erhöhung der Oberflächenspannung vorbehandelt. Die dreischichtige Folie hatte einen Schichtaufbau erste Deckschicht/Basisschicht/zweite Deckschicht. Die einzelnen Schichten der Folie hatten die folgende Zusammensetzung:

### Erste Deckschicht (4,0 µm):

100 Gew.-% Ethylen-Propylen-Copolymerisat mit einem Ethylen-Anteil von 1,7 Gew.-% (bezogen auf das Copolymer) und einem Schmelzpunkt von 155 °C; und einem Schmelzflußindex von 8,5 g/10 min bei 230 °C und 2,16 kg Belastung (DIN 53 735) und einer Schmelzenthalpie von 96,9 J/g

### Basisschicht:

100 Gew.-% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung (DIN 53 735) und

### Zweite Deckschicht (2,0 µm):

99,7 Gew.-% Ethylen-Propylen-Copolymerisat mit einem Ethylen-Anteil von 4 Gew.-% (bezogen auf das Copolymer) und einem Schmelzpunkt von 136°C; und einem Schmelzflußindex von 7,3 g/10 min bei 230 °C und 2,16 kg Belastung (DIN 53 735) und einer Schmelzenthalpie von 64,7 J/g
0,3 Gew.-% Antiblockmittel mit einem mittleren Teilchendurchmesser ca. 4µm (Sylobloc 45)

Alle Schichten der Folie enthielten zusätzlich Stabilisator und Neutralisationsmittel in üblichen Mengen.

Im einzelnen wurde die folgenden Bedingungen und Temperaturen bei der Herstellung der Folie gewählt:

| | |
|---|---|
| Extrusion: | Extrusionstemperatur ca. 250 -270°C |
| Abkühlwalze: | Temperatur 30°C, |
| Längsstreckung: | T = 125 °C |
| Längsstreckung um den | Faktor 5 |
| Querstreckung: | T = 165 °C |
| Querstreckung um den | Faktor 9 |
| Fixierung | T = 143°C |

Die Folie wurde auf der Oberfläche der ersten Deckschicht mittels Corona oberflächenbehandelt und wies eine Oberflächenspannung von 38mN/m auf. Die Folie hatte eine Dicke von 17µm.

### Beispiel 2:

Es wurde eine Folie nach Beispiel 1 hergestellt. Im Unterschied zu Beispiel 1 wurde eine erste Zwischenschicht mit einer Dicke von 4µm zwischen der Basis- und der ersten Deckschicht eingefügt. Zusätzlich wurde die Dicke der ersten Deckschicht von 4 µm auf 1,5 µm reduziert, so daß eine Gesamtdicke aus erster Deckschicht und erster Zwischenschicht von 5,5 µm resultierte:

### Erste Zwischenschicht (4µm):

100 Gew.-% Ethylen-Propylen-Copolymerisat mit einem Ethylen-Anteil von 1,7 Gew.-% (bezogen auf das Copolymer) und einem Schmelzpunkt von 155 °C; und einem Schmelzflußindex von 8,5 g/10 min bei 230 °C und 2,16 kg Belastung (DIN 53 735) und einer Schmelzenthalpie von 96,9 J/g.

Die Zusammensetzung der übrigen Schichten entspricht Beispiel 1.

### Vergleichsbeispiel 1

Es wurde eine transparente Folie nach Beispiel 1 hergestellt. Im Unterschied zu Beispiel 1 betrug die Dicke der ersten Deckschicht nur 0,5 µm. Die Gesamtdicke der Folie betrug 17 µm.

### Vergleichsbeispiel 2

Es wurde eine Folie nach Beispiel 1 hergestellt. Im Unterschied zu Beispiel 1 wurde die Zusammensetzung der ersten Deckschicht geändert.

### Erste Deckschicht (4µm):

100 Gew.-% Ethylen-Propylen-Copolymerisat mit einem Ethylen-Anteil von 4 Gew.-% (bezogen auf das Copolymer) und einem Schmelzpunkt von 136°C; und einem Schmelzflußindex von 7,3 g/10 min bei 230 °C und 2,16 kg Belastung (DIN 53 735) und einer Schmelzeenthalpie von 64,7 J/g

Alle Folien nach den Beispielen und den Vergleichsbeispielen wurden in einer Vakuum Metallisieranlage auf der Oberfläche der ersten Deckschicht mit einer Aluminiumschicht beschichtet. Zur Verbesserung der Metallhaftung wurde die Oberfläche unmittelbar vor der Beschichtung einer Plasmabehandlung unterworfen. Die Eigenschaften der metallisierten Folien nach den Beispielen und den Vergleichsbeispielen sind in der Tabelle 1 zusammengestellt. Es zeigt sich, daß die erfindungsgemäßen Folien nach den Beispielen 1, 2 und 3 hervorragende Barrierewerte gegen Wasserdampf und Sauerstoff aufweisen.

| Beispiel | Dicke der metallisierten Deckschicht µm | Dicke der Zwischenschicht µm | Rohstoff der metallisierten Schicht | WDD 38°C 90% rel. Feuchte * | OTR 23°C, 50% rel. Feuchte * |
|---|---|---|---|---|---|
| Bsp. 1 | 4 | 0 | Minicopo | < 0,2 | ~10 |
| Bsp. 2 | 1,5 | 4 | Minicopo | < 0,2 | ~15 |
| VB 1 | 0,8 | 0 | Minicopo | < 0,3 | ~30 |
| VB 2 | 4 | 0 | Standard Copo | < 0,4 | ~60 |

| | | | | | |
|---|---|---|---|---|---|
| * nach Metallisierung | | | | | |

## Patentansprüche

1. Metallisierte, biaxial orientierte transparente Polypropylenmehrschichtfolie mit
(a) mindestens zwei Schichten aus einer Basisschicht und mindestens einer ersten Deckschicht auf einer Oberfläche der Basisschicht oder
(b) mindestens drei Schichten aus einer Basisschicht und mindestens einer ersten Zwischenschicht und einer ersten Deckschicht, wobei die erste Deckschicht und die erste Zwischenschicht aufeinanderliegen, **dadurch gekennzeichnet, daß**
(a) die erste Deckschicht mindestens 80 Gew.-% eines Propylen-Ethylen-Copolymeren enthält, welches einen Ethylengehalt von 1,2 bis < 2,8 Gew.-% und einen Propylengehalt von 97,2 - 98,8 Gew.- % und einen Schmelzpunkt im Bereich von 140 bis 160°C und eine Schmelzenthalpie von 80 bis 110 J/g aufweist oder
(b) die erste Deckschicht und die erste Zwischenschicht jeweils mindestens 80 Gew.-% eines Propylen-Ethylen-Copolymeren enthalten, welches einen Ethylengehalt von 1,2 bis < 2,8 Gew.-% und einen Propylengehalt von 97,2 - 98,8 Gew.- % und einen Schmelzpunkt im Bereich von 140 bis 160°C und eine Schmelzenthalpie von 80 bis 110 J/g aufweist und
(a) die erste Deckschicht eine Dicke von **mindestens 3.5 µm** aufweist oder
(b) die erste Deckschicht eine Dicke von 0,5 - 2µm und die erste Zwischenschicht eine Dicke von **mindestens 3 µm** und
die Folie auf der Oberfläche der ersten Deckschicht metallisiert ist.

2. Folie nach Anspruch 1, **dadurch gekennzeichnet, daß** das Propylen-Ethylen-Copolymere 1,5 bis 2,3 Gew.-% Ethylen enthält und einen Schmelzpunkt im Bereich von 145 bis 155 °C und eine Schmelzenthalpie von 90 bis 100 J/g hat.

3. Folie nach einem der Ansprüche 1 oder 2, **dadurch gekennzeichnet, daß** die erste Deckschicht kein Antiblockmittel enthält.

4. Folie nach einem der Ansprüche 1 bis 3, **dadurch gekennzeichnet, daß** die Basisschicht aus Propylenhomopolymer aufgebaut ist.

5. Folie nach einem der Ansprüche 1 bis 4, **dadurch gekennzeichnet, daß** die Folie auf der gegenüberliegenden Seite eine zweite, siegelfähige Deckschicht mit mindestens 80 bis <100 Gew.-% eines Propylenpolymeren mit mindestens 80 Gew.-% Propyleneinheiten. aufweist,

6. Folie nach Anspruch 5, **dadurch gekennzeichnet, daß** die zweite Deckschicht ein Antiblockmittel enthält.

7. Verfahren zur Herstellung einer Folie nach einem der Ansprüche 1 bis 6, **dadurch gekennzeichnet, daß** die polyolefinischen Schichten coextrudiert werden.

8. Verfahren nach Anspruch 7, **dadurch gekennzeichnet, daß** die Folie auf der Oberfläche der ersten Deckschicht während der Folienherstellung mittels Corona, Plasma, oder Flamme vorbehandelt wird.

9. Verfahren, nach Anspruch 8, **dadurch gekennzeichnet, daß** die zu metallisierende Oberfläche unmittelbar vor der Metallisierung mittels Plasma behandelt wird.

10. Verwendung einer Folie nach einem der Ansprüche 1 bis 6 zur Herstellung einer Beutelverpackung.

11. Verwendung einer Folie nach einem der Ansprüche 1 bis 6 zur Herstellung eines Laminats, **dadurch gekennzeichnet, daß** die metallisierte Seite gegen eine weitere Folie laminiert wird.

12. Verwendung nach Anspruch 11, **dadurch gekennzeichnet, daß** die metallisierte Folie mit der metallisierten Seite gegen eine zweite biaxial orientierte Polypropylenfolie laminiert wird.

## Claims

1. A metallised biaxially oriented transparent polypropylene multi-layer film comprising
(a) at least two layers consisting of a base layer and at least one first cover layer on a surface of the base layer, or
(b) at least three layers consisting of a base layer and at least one first intermediate layer and a first cover layer, wherein the first cover layer and the first intermediate layer are arranged one on top of the other, **characterised in that**
(a) the first cover layer contains at least 80 % by weight of a propylene-ethylene copolymer which has an ethylene content from 1.2 to < 2.8 % by weight and a propylene content from 97.2 - 98.8 % by weight and a melting point in the range from 140 to 160 °C and a fusion enthalpy from 80 to 110 J/g, or
(b) the first cover layer and the first intermediate layer each contain at least 80 % by weight of a propylene-ethylene copolymer which has an ethylene content from 1.2 to < 2.8 % by weight and a propylene content from 97.2 - 98.8 % by weight and a melting point in the range from 140 to 160 °C and a fusion enthalpy from 80 to 110 J/g, and
(a) the first cover layer has a thickness of at least 3.5 µm or
(b) the first cover layer has a thickness of 0.5 - 2 µm and the first intermediate layer has a thickness of at least 3 µm and
the film is metallised on the surface of the first cover layer.

2. The film according to claim 1, **characterised in that** the propylene-ethylene copolymer contains 1.5 to 2.5 % by weight of ethylene and has a melting point in the range from 145 to 155 °C and a fusion enthalpy from 90 to 100 J/g.

3. The film according to one of claims 1 to 2, **characterised in that** the first cover layer contains no antiblocking agent.

4. The film according to one of claims 1 to 3, **characterised in that** the base layer is constructed from propylene homopolymer.

5. The film according to one of claims 1 to 4, **characterised in that** the film has, on the opposite side, a second sealable cover layer with at least 80 to < 100 % by weight of a propylene polymer with at least 80 % by weight propylene units.

6. The film according to claim 5, **characterised in that** the second cover layer contains an antiblocking agent.

7. The method for producing a film according to one of claims 1 to 6, **characterised in that** the polyolefin layers are coextruded.

8. The method according to claim 7, **characterised in that** the film is pre-treated by means of corona, plasma or flame on the surface of the first cover layer during the film production.

9. The method according to claim 8, **characterised in that** the surface to be metallised is treated by means of plasma immediately before the metallisation.

10. Use of a film according to one of claims 1 to 6 for producing a bag packaging.

11. Use of a film according to one of claims 1 to 6 for producing a laminate, **characterised in that** the metallised side is laminated with respect to a further film.

12. The use according to claim 11, **characterised in that** the metallised film with the metallised side is laminated with respect to a second biaxially oriented polypropylene film.

## Revendications

1. Feuille multicouche transparente en polypropylène qui est métallisée et biaxialement orientée et qui comporte
(a) au moins deux couches constituées d'une couche de base et d'au moins une première couche de couverture située sur une surface de la couche de base, ou
(b) au moins trois couches constituées d'une couche de base de d'au moins une première couche intermédiaire et d'une première couche de couverture, la première couche de couverture et la première couche intermédiaire étant disposées l'une sur l'autre, **caractérisée en ce que**
(a) la première couche de couverture contient au moins 80 % en poids d'un copolymère propylène-éthylène dont la teneur en éthylène est comprise entre 1,2 et < 2,8 % en poids et dont la teneur en propylène est comprise entre 97,2 et 98,8 % en poids et dont le point de fusion est compris entre 140 et 160 °C et dont l'enthalpie de fusion est comprise entre 80 et 110 J/g, ou
(b) la première couche de couverture et la première couche intermédiaire contiennent au moins 80 % en poids d'un copolymère propylène-éthylène dont la teneur en éthylène est comprise entre 1,2 et < 2,8 % en poids et dont la teneur en propylène est comprise entre 97,2 et 98,8 % en poids et dont le point de fusion est compris entre 140 et 160 °C et dont l'enthalpie de fusion est comprise entre 80 et 110 J/g, et
(a) la première couche de couverture présente une épaisseur d'au moins 3,5 µm, ou
(b) la première couche de couverture une épaisseur comprise entre 0,5 et 2 µm et la première couche intermédiaire une épaisseur d'au moins 3 µm, et
ladite feuille étant métallisée sur la surface de la première couche de couverture.

2. Feuille selon la revendication 1, **caractérisée en ce que** le copolymère propylène-éthylène contient 1,5 à 2,3 % en poids d'éthylène, tout en présentant un point de fusion compris entre 145 et 155 °C ainsi qu'une enthalpie de fusion comprise entre 90 et 100 J/g.

3. Feuille selon l'une des revendications 1 ou 2, **caractérisée en ce que** la première couche de couverture ne contient pas d'agents anti-adhérents.

4. Feuille selon l'une des revendications 1 à 3, **caractérisée en ce que** la couche de base est constituée d'homopolymère de propylène.

5. Feuille selon l'une des revendication 1 à 4, **caractérisée en ce que** ladite feuille présente, sur sa face opposée, une deuxième couche de couverture qui est apte au scellement et qui comporte au moins 80 et < 100 % en poids d'un polymère de propylène dont la teneur en unités de propylène est supérieure ou égale à 80 % en poids.

6. Feuille selon la revendication 5, **caractérisée en ce que** la deuxième couche de couverture contient un agent. anti-adhérent.

7. Procédé de fabrication d'une feuille selon l'une des revendications 1 à 6, **caractérisé en ce que** les couches polyoléfiniques sont co-extrudées.

8. Procédé selon la revendication 7, **caractérisé en ce que**, pendant la fabrication de la feuille, la surface de la première couche de couverture de ladite feuille subit traitement préalable de type corona, plasma ou flamme.

9. Procédé selon la revendication 8, **caractérisé en ce que** la surface à métalliser subit un traitement au plasma directement avant sa métallisation.

10. Utilisation d'une feuille selon l'une des revendications 1 à 6 pour fabriquer un sachet d'emballage.

11. Utilisation d'une feuille selon l'une des revendications 1 à 6 pour fabriquer un élément stratifié, **caractérisée en ce que** la face métallisée est plaquée contre une autre feuille en mettant en oeuvre un processus de laminage.

12. Utilisation selon la revendication 11, **caractérisée en ce que** la face métallisée de la feuille métallisée est plaquée contre une deuxième feuille en polypropylène biaxialement orientée en mettant en oeuvre un processus de laminage.
